# EUROPEAN PATENT SPECIFICATION

(11) **EP 4 117 344 B1**
(45) Date of publication and mention of the grant of the patent: **29.07.2026**
(21) Application number: 21776442.2
(22) Date of filing: 04.03.2021
(51) Int. Cl.: H04L 5/00, H04W 48/10, H04W 52/02, H04W 48/14, H04W 72/25, H04W 72/40, H04W 74/00, H04W 76/14, H04W 92/18

(54) **SIGNAL TRANSMISSION FOR SIDELINK COMMUNICATION WITH SERVICE-RELATED IDENTIFICATION**
SIGNALÜBERTRAGUNG FÜR SIDELINK-KOMMUNIKATION MIT DIENSTBEZOGENER IDENTIFIZIERUNG
TRANSMISSION DE SIGNAL POUR COMMUNICATION DE LIAISON LATÉRALE AVEC IDENTIFICATION LIÉE À UN SERVICE

(30) Priority: 27.03.2020 CN 202010232300
(43) Date of publication of application: 11.01.2023
(73) Proprietor: Huawei Technologies Co., Ltd., Shenzhen, Guangdong 518129, (CN)
(72) Inventor: LIU, Yun, Shenzhen, Guangdong 518129 (CN); XU, Haibo, Shenzhen, Guangdong 518129 (CN); WANG, Zhou, Shenzhen, Guangdong 518129 (CN)
(74) Representative: Maiwald GmbH
(86) International application number: PCT/CN2021/079155
(87) International publication number: WO 2021/190272

(56) References cited:
- WO-A1-2015/188345
- WO-A1-2016/144574
- CN-A- 107 197 342
- CN-A- 110 599 603
- KR-A- 20180 109 199
- US-A1- 2015 009 858
- US-A1- 2015 264 551
- "3rd Generation Partnership Project; Technical Specification Group Services and System Aspects; Virtual Reality (VR) profiles for streaming applications (Release 15)", 3GPP STANDARD; TECHNICAL SPECIFICATION; 3GPP TS 26.118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V16.0.0, 24 March 2020 (2020-03-24), Mobile Competence Centre ; 650, route des Lucioles ; F-06921 Sophia-Antipolis Cedex ; France, pages 1 - 82, XP051861063

## Description

This application claims priority to Chinese Patent Application No. 202010232300.8, filed with the China National Intellectual Property Administration on March 27, 2020 and entitled "SIGNAL TRANSMISSION METHOD AND APPARATUS".

### TECHNICAL FIELD

This application relates to the field of communication technologies, and in particular, to a signal transmission method and apparatus, and a chip.

### BACKGROUND

Currently, in a device to device (device to device, D2D) scenario of a long term evolution (long term evolution, LTE) system, to enable communication between two terminals, a connection needs to be established between the two terminals. Specifically, the two terminals may establish the connection by using either of two access manners. The two access manners are respectively referred to as a Model 1 (Model) A and a Model B. The following separately describes the two access manners.

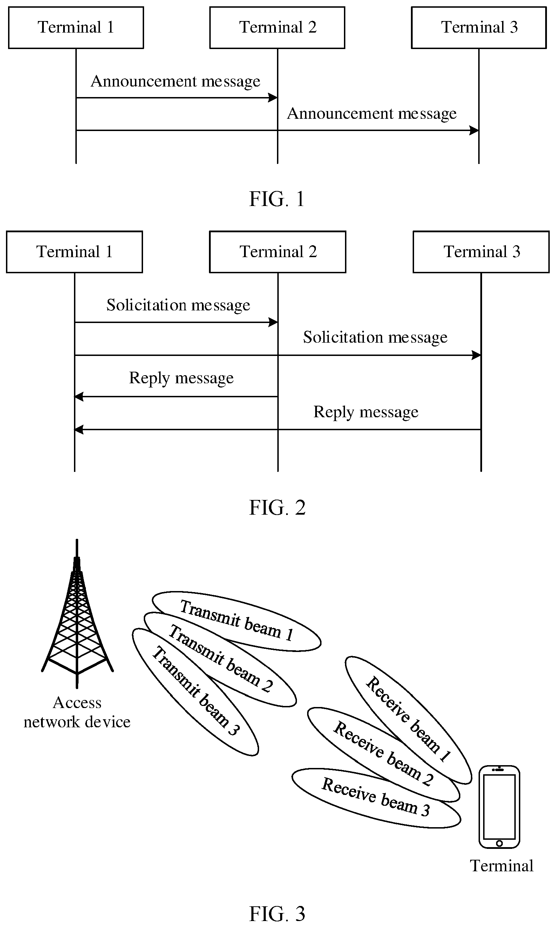

Model A: Refer to FIG. 1. A terminal 1 broadcasts an announcement (announcement) message to notify surrounding terminals (that is, a terminal 2 and a terminal 3) of "I am here" (that is, "I am here"). The terminal 2 and the terminal 3 detect the announcement message, and parse the announcement message to obtain information such as an identity (Identity, ID) of the terminal 1 at a higher layer, to learn existence of the terminal 1 and establish a connection with the terminal 1.

Model B: Refer to FIG. 2. A terminal 1 broadcasts a solicitation (solicitation) message to query surrounding terminals (that is, a terminal 2 and a terminal 3) "who is there" (that is, "Who is there"). After detecting the solicitation message, the terminal 2 and the terminal 3 each parse the solicitation message to obtain information such as an identity of the terminal 1 at a higher layer, and send a reply message to the terminal 1, that is, notify the terminal 1 of "I am here" (that is, "I am here"). The terminal 1 parses the reply message to obtain information such as identities of the terminal 2 and the terminal 3 at a higher layer, to learn existence of the terminal 2 and the terminal 3 and establish connections to the terminal 2 and the terminal 3.

In D2D communication, a terminal can obtain required data only when the terminal accesses a terminal that provides a required service for the terminal. However, the foregoing method cannot ensure that the terminal quickly accesses the terminal that provides the required service for the terminal.
US 2015/009858 A1 describes that, in a discovery procedure, device identifier information and service-related information provided by the device may be obtained. For the discovery, a device joining in the D2D direct communication may periodically provide own device identifier information or service information to neighbor devices in a broadcasting manner.
WO 2016/144574 A1 describes link adaption for D2D communications. A method comprises: receiving, by a first WTRU, information indicating Return Sidelink (RSL) resources associated with RSL D2D communication between the first WTRU and a second WTRU; determining, by the first WTRU, the RSL resources based on the received information; and transmitting, by the first WTRU to the second WTRU, sidelink information using the determined RSL resources.
US 2015/264551 A1 describes a discovery method for device to device communication between terminals, comprising the steps of: performing transmission in a first sub-frame; transmitting a discovery channel through a preset section in a second sub-frame located next to the first sub-frame; and performing transmission in a third sub-frame next to the second sub-frame. Therefore, the present invention can transmit and receive the discovery channel without colliding with other data.

### SUMMARY

The invention is set out in the appended independent claims, wherein further embodiments are set out in the dependent claims. Solutions of this application provide a signal transmission method and apparatus, to ensure that in D2D communication, a terminal quickly accesses a terminal that provides a required service for the terminal.

### BRIEF DESCRIPTION OF DRAWINGS

FIG. 1 is an interaction flowchart of establishing a connection between terminals;
FIG. 2 is another interaction flowchart of establishing a connection between terminals;
FIG. 3 is a schematic diagram of beam communication between an access network device and a terminal according to an embodiment of this application;
FIG. 4 is a schematic diagram of a network architecture according to an embodiment of this application;
FIG. 5 is an interaction flowchart of a signal transmission method according to an embodiment of this application;
FIG. 6 is a schematic diagram of access resource broadcasting and access resource using according to an embodiment of this application;
FIG. 7 is an interaction flowchart of another signal transmission method according to an example of this application;
FIG. 8 is a schematic diagram of another access resource broadcasting and access resource using according to an embodiment of this application;
FIG. 9 is a schematic diagram of another access resource broadcasting and access resource using according to an embodiment of this application;
FIG. 10 is a schematic diagram of a protocol layer in a terminal according to an embodiment of this application;
FIG. 11 is a schematic diagram of composition of a signal transmission apparatus according to an embodiment of this application;
FIG. 12 and FIG. 13 each are a schematic diagram of a hardware structure of a signal transmission apparatus according to an embodiment of this application; and
FIG. 14 is a schematic diagram of a hardware structure of a terminal according to an embodiment of this application.

### DESCRIPTION OF EMBODIMENTS

To make embodiments of this application clearer, the following briefly describes concepts and some content that are related to embodiments of this application.

### 1. Beam (beam)

A main problem of high-frequency communication is that signal energy sharply decreases as a transmission distance increases, resulting in a short signal transmission distance. To overcome this problem, an analog beam technology is used in the high-frequency communication. A large-scale antenna array is used for weighted processing, so that energy of a signal is concentrated in a small range, to form a signal similar to an optical beam (the signal is referred to as an analog beam, and is briefly referred to as a beam), to increase a transmission distance.

A beam is a communication resource. The beam may be a wide beam, a narrow beam, or a beam of another type. A technology for forming a beam may be a beamforming technology or another technical means. The beamforming technology may be specifically a digital beamforming technology, an analog beamforming technology, or a hybrid beamforming technology. Different beams may be considered as different resources. Same information or different information may be sent by using different beams. Optionally, a plurality of beams having a same communication feature or similar communication features may be considered as one beam.

Beams include a transmit beam and a receive beam. The transmit beam may be distribution of signal strength formed in different directions in space after a signal is transmitted by using an antenna, and the receive beam may be distribution in which an antenna array enhances or weakens reception of a radio signal in different directions in space.

It should be noted that a beam is not distinguished as a transmit beam or a receive beam. A beam is a transmit beam when being used to send information, and is a receive beam when being used to receive information.

Although the analog beam technology is often applied to the high-frequency communication, it should be clarified that in a low-frequency communication scenario, communication quality can also be improved by using the analog beam technology.

2. An access process of a terminal on an air interface in an existing multiple input multiple output (multiple input multiple output, MIMO) scenario.

On an air interface in a MIMO scenario, an access network device periodically sends a synchronization signal block (synchronization signal block, SSB). Each SSB may use a different beam, that is, each SSB is transmitted by using one beam. A corresponding access resource is configured for each beam. Correspondingly, each SSB also corresponds to an access resource corresponding to a beam sending the SSB. The SSB carries a master information block (master information block, MIB). The MIB indicates a resource location of a system information block (system information block, SIB) (for example, a time-frequency location of the SIB), and the SIB indicates a time-frequency location of an access resource corresponding to the SSB, to notify a terminal on which access resources the access network device can be accessed on the beam corresponding to the SSB. The access resource in this embodiment of this application may be a physical random access channel (physical random access channel, PRACH) resource.

The access network device may send the SSB at different moments by using different transmit beams, so that terminals at different locations can receive the SSB with high quality. For one SSB, the terminal may select a receive beam that matches a transmit beam corresponding to the SSB to receive the SSB, thereby ensuring signal receiving quality. For example, refer to FIG. 3. If the access network device sends the SSB by using a transmit beam 2, the terminal receives the SSB by using a receive beam 2 that matches the transmit beam 2. In a specific implementation, the terminal may determine, through beam scanning, the receive beam that matches the transmit beam.

After the terminal detects the SSB, if the terminal needs to send information to the access network device, the terminal may use a parameter (for example, an angle and a phase of an antenna when the SSB is received) corresponding to a receive beam for receiving the SSB as a parameter of a transmit beam used on an access resource corresponding to the SSB (that is, the terminal converts the receive beam for receiving the SSB into a transmit beam), and the access network device uses a parameter corresponding to a transmit beam for sending the SSB as a parameter of a receive beam used on the access resource corresponding to the SSB, to achieve beam pairing.

### 3. Demodulation reference signal (demodulated reference signal, DMRS) sequence

A DMRS sequence is a reference signal sequence used for data demodulation. The DMRS sequence is generally located on first one or first two orthogonal frequency division multiplexing (orthogonal frequency division multiplexing, OFDM) symbols in a message carrying data. The DMRS sequence includes a plurality of DMRS sequences that are orthogonal to each other.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example" or "for example" or the like is intended to present a relative concept in a specific manner.

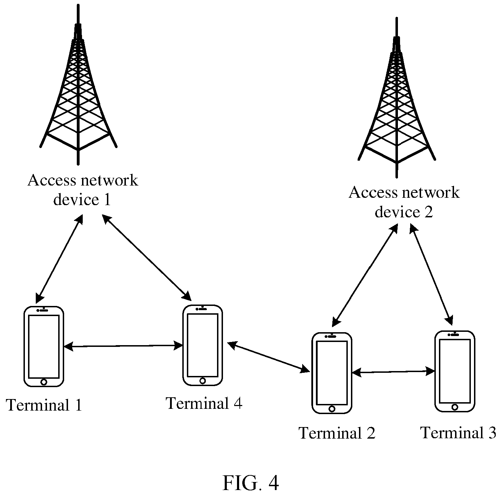

Refer to FIG. 4. Network elements in this application include an access network device and a terminal in a communication system. A method provided in embodiments of this application mainly relates to communication between terminals. A communication link for direct communication between terminals may be referred to as a sidelink (sidelink, SL) or a side link. On the sidelink, a transmit terminal may directly send data to a receive terminal, and does not need to first send the data to an access network device and then send the data to the receive terminal through forwarding by a core network. This greatly reduces a data transmission delay.

The communication system in embodiments of this application includes but is not limited to an LTE system, a 5th-generation (5th-generation, 5G) system, a new radio (new radio, NR) system, a wireless local area network (wireless local area networks, WLAN) system, and a future evolved system, or a plurality of converged communication systems. The 5G system may be a non-standalone (non-standalone, NSA) 5G system or a standalone (standalone, SA) 5G system.

The access network device in embodiments of this application is a network-side entity configured to send a signal, receive a signal, or send a signal and receive a signal. The access network device may be an apparatus that is deployed on a radio access network (radio access network, RAN) and that provides a wireless communication function for a terminal, for example, may be a transmission reception point (transmission reception point, TRP), a base station, or control nodes in various forms (for example, a network controller and a radio controller (for example, a radio controller in a cloud radio access network (cloud radio access network, CRAN) scenario)). Specifically, the access network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminals within coverage of the plurality of base stations. In systems using different radio access technologies, names of devices having functions of a base station may vary. For example, the device may be referred to as an evolved NodeB (evolved NodeB, eNB or eNodeB) in the LTE system, or may be referred to as a next generation node base station (next generation node base station, gNB) in the 5G system or the NR system. A specific name of the base station is not limited in this application. Alternatively, the access network device may be an access network device or the like in a future evolved public land mobile network (public land mobile network, PLMN).

The terminal in embodiments of this application is a user-side entity configured to receive a signal, send a signal, or receive a signal and send a signal. The terminal is configured to provide a user with one or more of a voice service and a data connectivity service. The terminal may also be referred to as user equipment (user equipment, UE), a terminal device, an access terminal, a subscriber unit, a subscriber station, a mobile station, a remote station, a remote terminal, a mobile device, a user terminal, a wireless communications device, a user agent, or a user apparatus. The terminal may be a vehicle to everything (vehicle to everything, V2X) device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal may be a D2D device, for example, an electricity meter or a water meter. Alternatively, the terminal may be a mobile station (mobile station, MS), a subscriber unit (subscriber unit), an unmanned aerial vehicle, an internet of things (internet of things, IoT) device, a station (station, ST) in a WLAN, a cellular phone (cellular phone), a smart phone (smart phone), a cordless telephone set, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a computing device, another processing device connected to a wireless modem, a vehicle-mounted device, or a wearable device (which may also be referred to as a wearable intelligent device). Alternatively, the terminal may be a terminal in the next generation communication system, for example, a terminal in the 5G system, a terminal in the future evolved PLMN, or a terminal in the NR system.

The method provided in embodiments of this application is applicable to but is not limited to the following fields: D2D, V2X (typical D2D communication), unmanned driving (unmanned driving), automated driving (automated driving, ADS), driver assistance (driver assistance, ADAS), intelligent driving (intelligent driving), connected driving (connected driving), intelligent network driving (intelligent network driving), car sharing (car sharing), and the like.

In a D2D scenario, a terminal 1 establishes a connection (for example, an RRC connection) to an access network device, other terminals (for example, a terminal 2 and a terminal 3) do not establish a connection to the access network device, and when the terminal 1 provides a service for the terminal 2 and the terminal 3 (that is, the terminal 1 establishes a D2D connection to the terminal 2 and the terminal 3), the terminal 2 and the terminal 3 may communicate with the access network device or a core network by using the terminal 1. In this case, the terminal 1 may be referred to as a header terminal (header UE) (or a master terminal), and the other terminals may be referred to as secondary terminals. For example, if a mobile terminal of a user establishes a connection to an access network device, and an electronic watch, smart glasses, a helmet-mounted display (helmet-mounted display, HMD), and the like of the user do not establish a connection to the access network device but establish a D2D connection to the mobile terminal, the mobile terminal is a header terminal, and the electronic watch, the smart glasses, the HMD, and the like are secondary terminals.

Power of the header terminal is not limited, and the header terminal can access the network and provide services for the secondary terminal. The header terminal has some functions of an access network device in original MIMO. For example, the header terminal sends an SSB for synchronization of a terminal in a range (that is, a terminal that listens to the SSB), and indicates an access resource location corresponding to the SSB of the terminal in the range. The terminal in the range synchronizes with the header terminal by using the SSB, and accesses the header terminal by using the access resource corresponding to the SSB. As a served terminal, the secondary terminal has an original function of a terminal in the origin MIMO, for example, listens to an SSB, determines an access resource location corresponding to the SSB, and sends a signal to the header terminal at the access resource location.

In the foregoing background, for Model A and Model B, after establishing a connection to the terminal 1, the terminal 2 and the terminal 3 need to obtain, through signaling interaction, information about a service provided by the terminal 1, and further determine whether the terminal 1 is a terminal that provides a required service. If no, the terminal 1 is disconnected, another terminal is connected, and determining is performed again. Therefore, the terminal that provides a required service for the terminal cannot be quickly connected, and power consumption of the terminal is increased.

In addition, for the Model B, the terminal 2 and the terminal 3 randomly select a resource to send a reply message to the terminal 1. As a result, the terminal 2 and the terminal 3 may use a same resource to feed back the reply message. In this case, the terminal 1 can decode a reply message sent by only one terminal at most, and at least one of the terminal 2 and the terminal 3 needs to reselect a resource for access. This increases a time for establishing a connection between the terminals. Consequently, it cannot be ensured that the terminal quickly accesses a terminal that provides a required service for the terminal. To resolve the foregoing problem, embodiments of this application provide a signal transmission method. The following separately provides descriptions in Embodiment 1 and Embodiment 2.

It should be noted that the method provided in this embodiment of this application may be applied to a MIMO scenario, for example, a high-frequency MIMO scenario or a low-frequency MIMO scenario. In this case, this embodiment of this application provides a D2D access procedure in a MIMO scenario, to complete functions such as terminal discovery (discovery), so that in the MIMO scenario, the terminal quickly accesses a terminal that provides a required service for the terminal. The method provided in embodiments of this application may be further applied to another scenario.

### Embodiment 1

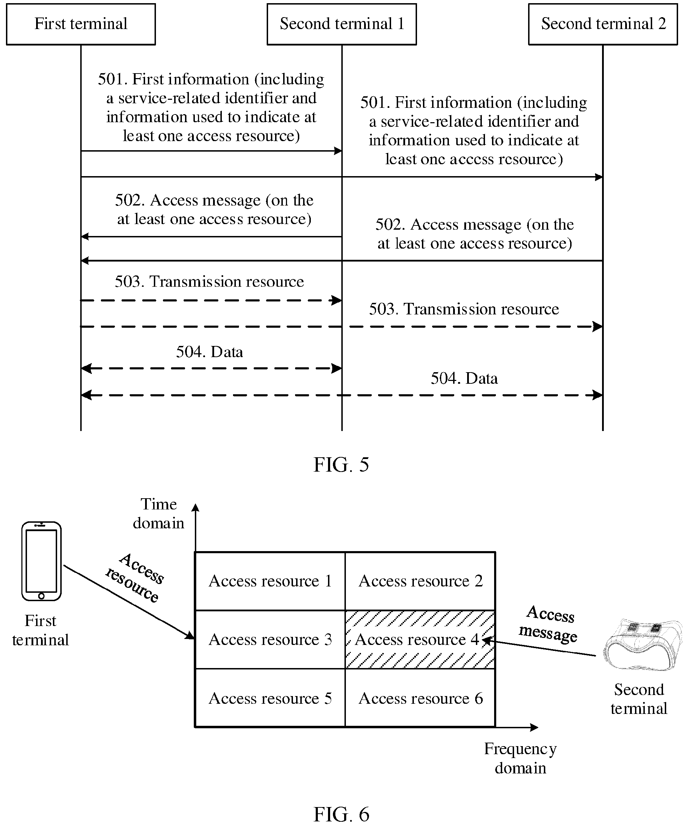

Embodiment 1 provides a signal transmission method. As shown in FIG. 5, the signal transmission method includes the following steps.

501. A first terminal broadcasts first information on a sidelink, and the first information includes a service-related identifier and information used to indicate at least one access resource.

The first terminal may be a header terminal, and the first terminal is configured to provide a service (or a service) corresponding to the service-related identifier. The service-related identifier broadcast by the first terminal indicates the service currently provided by the first terminal. The service in this embodiment of this application may be a service such as a virtual reality (virtual reality, VR) game, a VR video, an augmented reality (augmented reality, AR) game, or an AR video, or may be another D2D service.

The first terminal may broadcast one service-related identifier, or may broadcast a plurality of service-related identifiers. This is not limited in this application. The service-related identifier may be a part or all of a service identifier. For example, the service identifier may be a service identifier of a higher layer (for example, a layer 2 (layer-2) ID), a service identifier of a physical (physical, PHY) layer, or the like. It should be noted that all service-related identifiers transferred between the first terminal and the second terminal are at the PHY layer, but the service-related identifiers at the PHY layer may be transferred from a higher layer. In other words, the service-related identifier broadcast by the first terminal may be transferred from an upper-layer protocol layer of the first terminal. The first terminal broadcasts, at the PHY layer, the service-related identifier.

A higher layer in this embodiment of this application is a protocol layer higher than the PHY layer, for example, a media access control (media access control, MAC) layer, a radio link control (radio link control, RLC) layer, a packet data convergence protocol (packet data convergence protocol, PDCP) layer, a radio resource control (radio resource control, RRC) layer, a service discovery application profile (service discovery application profile, SDAP) layer, an application (application, APP) layer, and the like.

One service-related identifier may identify one service, and the service-related identifier is, for example, a combination of a group of bit strings, for example, 1010 and 1100. For example, as shown in Table 1, a correspondence between a service-related identifier and a service is: 0000 identifies a VR game, 0001 identifies a VR video, 0010 identifies an AR game, and 0100 identifies an AR video.

**Table 1**

| Service-related identifier | Service |
|---|---|
| 0000 | VR game |
| 0001 | VR video |
| 0010 | AR game |
| 0100 | AR video |

It should be noted that the service-related identifier generally corresponds to an APP, and one APP corresponds to one service-related identifier. It may also be understood that one APP corresponds to one service. When the first terminal and the second terminal start a same APP, it is considered that the first terminal and the second terminal currently perform a same service.

In this case, during specific implementation, step 501 may include: The first terminal broadcasts the first information on the sidelink when an APP corresponding to the service-related identifier is started. Correspondingly, the second terminal receives the first information from the first terminal on the sidelink when the APP corresponding to the service-related identifier is started.

The information used to indicate the access resource may be specifically information such as a time-frequency resource occupied by the access resource. One access resource may include one slot and one or more physical resource blocks (physical resource block, PRB). At least one access resource may form a resource pool. For example, the at least one access resource may be eight, six, four, or three access resources. A quantity of the access resources is related to a beam, and one beam usually corresponds to one access resource group.

Optionally, the first information is carried in an SSB (for example, carried in a MIB in the SSB); or the first information is carried in a SIB, and information used to indicate a resource location of the SIB is carried in an SSB. The SSB broadcast on the sidelink may also be denoted as an SL-SSB. The SIB broadcast on the sidelink may also be denoted as an SL-SIB.

The first terminal may periodically broadcast the SSB, for example, sequentially broadcast an SSB 1, an SSB 2, and an SSB 3 in each periodicity. The SSB 1, the SSB 2, and the SSB 3 each correspond to one transmit beam, so that terminals at different locations can receive the SSB with high quality. Each SSB may include the first information, to indicate an access resource corresponding to the SSB. The first information in this embodiment of this application may be the first information carried in any SSB. The access resource corresponding to each SSB (that is, an access resource corresponding to a beam used to send the SSB) may be allocated by an access network device to the first terminal.

After the first terminal broadcasts the first information, at least one second terminal receives the first information from the first terminal on the sidelink. The at least one second terminal is a potential secondary terminal, that is, one or more terminals of the at least one second terminal may become a secondary terminal of the first terminal, and the first terminal serves the secondary terminal. It should be noted that, if the first information is carried in the SSB, only a second terminal that receives the SSB by using a receive beam that matches a transmit beam of the SSB can receive the SSB with high quality.

It should be noted that, in an alternative not covered by the claims, the first information may include only the information used to indicate the at least one access resource, and does not include the service-related identifier.

502. The second terminal sends an access message to the first terminal on the at least one access resource.

For example, as shown in FIG. 6, if the first terminal broadcasts six access resources in total: an access resource 1 to an access resource 6, the second terminal may select one access resource (for example, the access resource 4) from the six access resources to send the access message to the first terminal.

The access message is used to request to access the first terminal, and the access message may include information such as serving data, an identifier of the second terminal, and a DMRS sequence.

The serving data is, for example, a QoS requirement (for example, a delay requirement) of the second terminal and a carried data volume. The identifier of the second terminal may be a temporary identifier, or may be a permanent identifier. The permanent identifier may be an identifier of the second terminal transmitted from a protocol layer above the MAC layer to the PHY layer or the MAC layer, or may be an identifier obtained by combining identifiers of the second terminal at the PHY layer and the MAC layer. For example, the permanent identifier may be an international mobile equipment identity (international mobile equipment identity, IMEI) or a mobile equipment identifier (mobile equipment identifier, MEID).

Optionally, the access message further includes service data. In this case, because the access message includes both the service data and the identifier of the second terminal, the first terminal may obtain the service data of the second terminal by using the access message, and receive the service data earlier. Therefore, a delay of data transmission between the first terminal and the second terminal can be reduced.

During specific implementation of step 502. if the first information includes the service-related identifier, the second terminal may send the access message to the first terminal on the at least one access resource when a service indicated by the service-related identifier is consistent with a service currently required by the second terminal.

It should be noted that if services indicated by one or more service-related identifiers broadcast by the first terminal are consistent with services required by a plurality of second terminals, the plurality of second terminals send the access message to the first terminal on the at least one access resource. In other words, the first terminal receives the access message from the at least one second terminal on the at least one access resource. For ease of understanding, FIG. 5 is drawn by using an example in which the first terminal receives access messages from two second terminals (denoted as a second terminal 1 and a second terminal 2) on the at least one access resource.

For example, if the first information broadcast by the first terminal includes three service-related identifiers shown in Table 1, which are 0000, 0001, and 0010 respectively, in a case in which services required by the second terminal 1 and the second terminal 2 are both VR games, after receiving the first information, the second terminal 1 and the second terminal 2 find that the first terminal broadcasts 0000. In this case, the second terminal 1 and the second terminal 2 send access messages to the first terminal on the at least one access resource. When the service required by the second terminal 1 is a VR game, and the service required by the second terminal 2 is a VR video, after receiving the first information, the second terminal 1 finds that the first terminal broadcasts 0000. In this case, the second terminal 1 sends an access message to the first terminal on the at least one access resource. After receiving the first information, the second terminal 2 finds that the first terminal broadcasts 0001. In this case, the second terminal 2 sends an access message to the first terminal on the at least one access resource. In a case in which the service required by the second terminal 1 is an AR video, after receiving the first information, the second terminal 1 finds that the first terminal does not broadcast 0100. In this case, the second terminal 1 does not send an access message to the first terminal.

It should be noted that, in the D2D scenario, there may be a plurality of first terminals (that is, a plurality of header terminals). In this case, the plurality of first terminals separately broadcast respective first information. One second terminal may receive first information broadcast by a plurality of first terminals. The second terminal determines, by determining whether a service indicated by a service-related identifier in the first information is consistent with a service required by the second terminal, which first terminal is the first terminal that needs to be accessed. After the first terminal that needs to be accessed is determined, the access message is sent on the access resource of the first terminal.

It should be noted that when access resources of two first terminals overlap, and the second terminal exactly sends the access message by using the overlapped access resource, both of the two first terminals can receive the access message sent by the second terminal. Therefore, to enable the first terminal to further identify whether the access message is an access message sent to the first terminal, optionally, the SSB further includes an identifier of the first terminal. Correspondingly, the access message further includes the identifier of the first terminal. Specifically, after receiving the SSB, the second terminal determines the identifier of the first terminal that sends the SSB. If it is determined, based on the service-related identifier, that the first terminal is the first terminal that the second terminal needs to access, the second terminal uses the access message to carry the identifier of the first terminal and sends the access message to the first terminal. After receiving the access message, if the first terminal finds that the identifier carried in the access message is consistent with the identifier of the first terminal, the first terminal determines that the access message is the access message sent to the first terminal. If the first terminal finds that the identifier carried in the access message is inconsistent with the identifier of the first terminal, the access message may be discarded.

To reduce a probability of an access resource conflict between different second terminals, each second terminal randomly selects the access resource.

When two second terminals select different access resources to send access messages to the first terminal, the first terminal may successfully decode the access messages sent by the two second terminals.

When the access resources selected by the two second terminals are the same, if a difference between transmit power of the two second terminals is relatively large, the first terminal can receive only an access message sent by a second terminal whose transmit power is larger. If the difference between the transmit power of the two second terminals is small, the first terminal may receive the access messages sent by the two second terminals. However, because the two second terminals use a same access resource, the first terminal cannot decode the access messages sent by the two second terminals.

Therefore, if the first terminal receives the access message on one access resource and can successfully decode the access message, the first terminal may determine that the access resource corresponds to one second terminal. However, a specific second terminal is unknown, and needs to be determined by using other information. In this case, if the first terminal receives a plurality of access messages on a plurality of access resources and can decode the plurality of access messages, the first terminal may determine that each of the plurality of access resources corresponds to one second terminal. However, a specific second terminal corresponding to each access resource is unknown, and needs to be determined by using other information. For example, as shown in FIG. 6, if the second terminal 1 to the second terminal 6 send access messages to the first terminal by using an access resource 1 to an access resource 6 respectively, the first terminal may determine that each of the six access resources corresponds to one second terminal.

It may be understood that, because different second terminals may use a same access resource, a quantity of second terminals that send access messages may be greater than a quantity of second terminals determined by the first terminal.

It should be noted that when a quantity of overlapping access resources of different first terminals is less than a value (for example, one or two), the SSB may not include the identifier of the first terminal because access resources used by different second terminals do not conflict or a probability of conflict is relatively low. Correspondingly, the access message may not carry the identifier of the first terminal. To ensure that access resources used by different second terminals do not conflict, the access network device may allocate different access resources when allocating access resources to different first terminals.

After step 502, the method further includes the following steps.

503. The first terminal configures, for the second terminal, a transmission resource for sending data to the first terminal. Correspondingly, the second terminal receives, from the first terminal, the configured transmission resource for sending data to the first terminal.

The first terminal may configure the transmission resource for the second terminal when successfully decoding the access message.

The transmission resource includes one or more of a time domain resource, a frequency domain resource, and a code domain resource. Information used to indicate the transmission resource may be carried in a transmission resource allocation message.

504. The second terminal transmits data with the first terminal on the transmission resource.

The data transmitted between the second terminal and the first terminal includes serving data and/or service data. For example, if the service provided by the first terminal for the second terminal is a VR video, the service data transmitted between the second terminal and the first terminal is VR video data. If the service provided by the first terminal for the second terminal is a VR game, the service data transmitted between the second terminal and the first terminal is VR game data.

For example, during specific implementation, step 504 may include: The second terminal sends picture update information to the first terminal, and the first terminal receives the picture update information from the second terminal, and sends updated picture information to the second terminal based on the picture update information. Correspondingly, the second terminal receives the updated picture information from the first terminal, and updates a picture based on the updated picture information.

The picture update information is information used to update the picture, for example, head rotation information of a user, or information indicating picture update of a user.

Optionally, the method further includes: when the second terminal does not receive the transmission resource allocation message corresponding to the access message, the second terminal reselects an access resource, and sends the access message to the first terminal by using the reselected access resource.

That the second terminal does not receive the transmission resource allocation message corresponding to the access message may include but is not limited to the following two scenarios: 1. The second terminal does not receive a response message of the access message. 2. The second terminal receives the response message of the access message, but the response message does not include information about the transmission resource configured for the second terminal.

The first terminal may not configure the transmission resource for the second terminal when the first terminal does not receive the access message or fails to decode the access message. If the second terminal does not receive the transmission resource allocation message corresponding to the access message, the second terminal may consider that access fails, and needs to reselect an access resource to perform access again.

It can be learned from the description in the foregoing embodiment that the first terminal periodically sends the SSB, and the access resource reselected by the second terminal may be an access resource corresponding to the SSB in a next periodicity of the SSB previously received, or may be an access resource corresponding to another SSB. For example, if the SSB previously received by the second terminal is an SSB 1, the access resource reselected by the second terminal may be an access resource of the SSB 1 in a next periodicity, or may be an access resource of another SSB (for example, an SSB 2) that belongs to a same sending periodicity as the SSB 1 previously received.

For example, an application scenario of Embodiment 1 is as follows: A user needs to use VR glasses to perform a VR video. In this case, the user taps an APP on a mobile phone (that is, the first terminal) and an APP on the VR glasses (that is, the second terminal). When the mobile phone starts the APP, the mobile phone broadcasts the first information on the sidelink. After receiving the first information, the VR glasses determine whether the service-related identifier in the first information is consistent with a service-related identifier corresponding to the APP started by the VR glasses. If yes, the VR glasses select an access resource from access resources in the first information, and send an access message to the mobile phone. If the first terminal successfully decodes the access message, the first terminal configures the transmission resource for the second terminal. In a subsequent process, the second terminal and the first terminal transmit data on the transmission resource. If the decoding fails or the access message is not received, the transmission resource is not configured for the second terminal. The second terminal reselects an access resource to send the access message to the first terminal.

For example, after the transmission resource is configured, if the head of the user rotates, a motion sensor in the VR glasses collects head rotation information of the user, and the VR glasses send the head rotation information to the mobile phone on the transmission resource. The mobile phone updates a video picture after receiving the head rotation information, and sends updated picture information to the VR glasses on the transmission resource. The VR glasses update the picture based on the updated picture information.

According to the method provided in this embodiment of this application, the second terminal may determine, based on the service-related identifier, whether the first terminal is the first terminal that can provide the required service for the second terminal. If yes, the first terminal is accessed by using the access resource broadcast by the first terminal. Therefore, the second terminal can be prevented from sending the access message to the first terminal that cannot provide the required service to the second terminal, and it is ensured that the second terminal quickly accesses the terminal that provides the required service to the second terminal, thereby improving access efficiency of the second terminal, and reducing signaling overheads and terminal power consumption.

In the current technology, at a low frequency, to improve a throughput, D2D communication uses a high modulation order, and reliability is relatively low. At a high frequency, the D2D communication does not support beam alignment, thereby causing problems of limited coverage and low reliability. In this embodiment of this application, regardless of a high frequency or a low frequency, the access resource may be an access resource corresponding to a beam. The first terminal broadcasts the access resource, and the second terminal sends the access message on the access resource, to align beams at a receive end and a transmit end, thereby improving transmission reliability.

In addition, the first terminal may determine the second terminal in Manner 1 or Manner 2, to subsequently configure the transmission resource for the second terminal. The following describes in detail Manner 1, Manner 2, and other technical solutions in embodiments of this application in each manner.

Manner 1: The first terminal determines the second terminal by using the identifier of the second terminal.

In Manner 1, the identifier of the second terminal may be carried in the access message. After receiving the access message, the first terminal parses the access message to obtain the identifier of the second terminal, determines the second terminal based on the identifier of the second terminal, and subsequently may directly communicate with the second terminal by using the identifier of the second terminal. An identifier of one second terminal is used to identify one second terminal.

In Manner 1, during specific implementation, step 503 may include: The first terminal sends transmission resource configuration information to the second terminal corresponding to the identifier of the second terminal, where the transmission resource configuration information includes information used to indicate a transmission resource and the identifier of the second terminal. Correspondingly, the second terminal receives the transmission resource configuration information from the first terminal. In this case, during specific implementation, step 504 may include: When the identifier in the transmission resource configuration information is consistent with the identifier of the second terminal, the second terminal transmits data with the first terminal on the transmission resource.

The second terminal may determine, based on the identifier in the transmission resource configuration information sent by the first terminal, whether the transmission resource is a transmission resource configured for the second terminal. Specifically, if the identifier in the transmission resource configuration information is consistent with the identifier of the second terminal, it may be determined that the transmission resource is the transmission resource configured by the first terminal for the second terminal.

In this embodiment of this application, the identifier of the second terminal may be a part or all of the identifier of the second terminal. For example, the identifier of the second terminal may be a part or all of an identifier of a second terminal at a higher layer (for example, a source layer-2 (source layer-2) ID, a destination layer-2 (destination layer-2) ID, or another layer 2 ID).

Manner 2: The first terminal determines the second terminal by using identification information of the second terminal.

In Manner 2, the access message includes the identification information of the second terminal.

The identification information of the second terminal may have the following two cases:
Case 1: The identification information of the second terminal is an identifier of a DMRS sequence, and the DMRS sequence is determined based on the identifier (partial or all of the identifier) of the second terminal.
Case 2: The identification information of the second terminal is an identifier of a DMRS sequence and a first partial identifier of the second terminal, the DMRS sequence is determined based on a second partial identifier of the second terminal, and the identifier of the second terminal consists of the first partial identifier and the second partial identifier of the second terminal.

In Case 2, the first partial identifier of the second terminal is a part of data in the access message, and the data in the access message may further include other information, for example, information such as higher layer load, a QoS parameter, and a carried data volume. The first terminal may obtain the data in the access message by decoding the access message, and further obtain the first partial identifier of the second terminal.

In Case 1 and Case 2, the first terminal may perform blind detection on a signal at a time-frequency location that is in the access message and that is used to carry the DMRS sequence, to obtain the DMRS sequence.

It should be noted that a function of the identifier of the DMRS sequence in the identification information of the second terminal is used to indicate the DMRS sequence used by the second terminal, and is only used to identify the second terminal in this application. Therefore, the identification information of the second terminal in Manner 2 may be considered as information used to indirectly identify the second terminal.

During specific implementation of Manner 2, each DMRS sequence may be numbered, a DMRS sequence whose number is 0 is a base sequence, and a number corresponding to each DMRS sequence is the identifier of the DMRS sequence. One DMRS sequence corresponds to one identifier. A DMRS sequence used by one second terminal is a DMRS sequence whose number is Y. Y is a value obtained after a modulo operation is performed on X by using the identifier (partial or all of the identifier) of the second terminal. X is a quantity of DMRS sequences. For example, X may be 32, 64, or the like. After receiving the access message, the first terminal may determine, through blind detection, the identifier of the DMRS sequence used by the second terminal. If two second terminals use different DMRS sequences (that is, identifiers of DMRS sequences used by the two second terminals are different), it is considered that the two second terminals are two different second terminals. The first terminal may further use the identifier of the DMRS used by the second terminal as a temporary identifier of the second terminal.

In Manner 2, during specific implementation, step 503 may include: The first terminal sends the transmission resource configuration information to the second terminal corresponding to the identifier of the DMRS sequence. The transmission resource configuration information includes the identification information of the second terminal and information used to indicate the transmission resource. Correspondingly, the second terminal receives the transmission resource configuration information from the first terminal. In this case, during specific implementation, step 504 may include: When the identification information of the second terminal in the transmission resource configuration information is consistent with the identification information corresponding to the second terminal, the second terminal transmits data with the first terminal on the transmission resource.

In Case 1, "when the identification information of the second terminal in the transmission resource configuration information is consistent with the identification information corresponding to the second terminal" may be replaced with "when the identifier in the transmission resource configuration information is consistent with the identifier of the DMRS sequence used when the second terminal sends the access message to the first terminal".

In Case 2, "when the identification information of the second terminal in the transmission resource configuration information is consistent with the identification information corresponding to the second terminal" may be replaced with "when the identifier of the DMRS sequence in the transmission resource configuration information is consistent with the identifier of the DMRS sequence used when the second terminal sends the access message to the first terminal, and the first partial identifier of the second terminal in the transmission resource configuration information is consistent with the first partial identifier of the second terminal".

In the foregoing Manner 1 and Manner 2, optionally, the transmission resource configuration information is carried in sidelink control information (sidelink control information, SCI). The SCI may be carried in the transmission resource allocation message corresponding to the access message.

In addition to the foregoing Manner 1 and Manner 2, an identifier of the access resource used to send the access message may also be used as the temporary identifier of the second terminal, to configure the transmission resource for the second terminal.

### Example 2

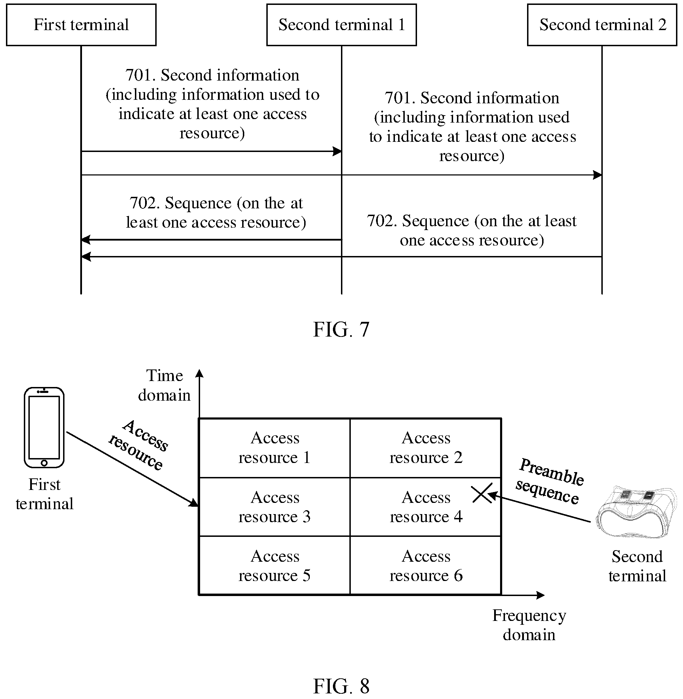

Example 2, which is not covered by the claims, provides a signal transmission method. As shown in FIG. 7, the method includes the following steps.

701. A first terminal broadcasts second information on a sidelink, and the second information includes information used to indicate at least one access resource.

The first terminal may be a header terminal. For related descriptions of the information used to indicate the access resource, refer to Embodiment 1. Details are not described again.

Optionally, the second information is carried in an SSB (for example, carried in an MIB in the SSB); or the second information is carried in a SIB, and information used to indicate a resource location of the SIB is carried in an SSB. The SSB broadcast on the sidelink may also be denoted as an SL-SSB. The SIB broadcast on the sidelink may also be denoted as an SL-SIB.

Optionally, the SSB further includes an identifier of the first terminal, so that a second terminal that receives the SSB can learn of the first terminal that sends the SSB.

The first terminal may periodically broadcast the SSB, for example, sequentially broadcast an SSB 1, an SSB 2, and an SSB 3 in each periodicity. The SSB 1, the SSB 2, and the SSB 3 each correspond to one transmit beam, so that terminals at different locations can receive the SSB with high quality. Each SSB may include the second information, to indicate an access resource corresponding to the SSB. The second information in this embodiment of this application may be second information carried in any SSB.

After the first terminal broadcasts the second information, the at least one second terminal receives the second information from the first terminal on the sidelink. The at least one second terminal is a potential secondary terminal, that is, one or more terminals of the at least one second terminal may become a secondary terminal of the first terminal. It should be noted that, if the second information is carried in the SSB, only a second terminal that receives the SSB by using a receive beam that matches a transmit beam of the SSB can receive the SSB with high quality.

702. The second terminal sends a sequence (Sequence) to the first terminal on the at least one access resource. The sequence is used to identify the second terminal, or in other words, the sequence is used to access the first terminal. Correspondingly, the first terminal receives the sequence from the second terminal on the at least one access resource.

The second terminal in step 702 may be any one of the at least one second terminal. It may be understood that if there is a plurality of second terminals that send the sequence, the first terminal separately receives the sequence from the plurality of second terminals. For ease of understanding, FIG. 7 is drawn by using an example in which the first terminal receives sequences from two second terminals (denoted as a second terminal 1 and a second terminal 2) on the at least one access resource.

An application scenario of Embodiment 2 is similar to that of Embodiment 1, and details are not described again.

According to the method provided in this embodiment of this application, different second terminals may use different sequences to access the first terminal on the access resource broadcast by the first terminal, so that the first terminal can identify the second terminal based on the sequences. When different second terminals use a same access resource, the first terminal can still identify the second terminal. Therefore, a time for establishing a connection between terminals can be reduced. If the first terminal is not a terminal that provides a service for the second terminal, the second terminal can also establish a connection to another first terminal in time. This ensures that the second terminal quickly accesses the terminal that provides the required service for the second terminal.

In the current technology, at a low frequency, to improve a throughput, D2D communication uses a high modulation order, and reliability is relatively low. At a high frequency, the D2D communication does not support beam alignment, thereby causing problems of limited coverage and low reliability. In this embodiment of this application, regardless of a high frequency or a low frequency, the access resource may be an access resource corresponding to a beam. The first terminal broadcasts the access resource, and the second terminal sends the access message on the access resource, to align beams at a receive end and a transmit end, thereby improving transmission reliability.

Optionally, the SSB further includes a service-related identifier. For related descriptions of the optional method, refer to Embodiment 1. Details are not described again. In this case, during specific implementation, step 702 may include: If a service indicated by the service-related identifier is consistent with a service currently required by the second terminal, the second terminal sends the sequence on the at least one access resource to the first terminal.

It should be noted that if a service indicated by one or more service-related identifiers broadcast by the first terminal is consistent with services required by a plurality of second terminals, the plurality of second terminals send the sequence to the first terminal on the at least one access resource. For a specific description, refer to Embodiment 1, and details are not described again.

Similar to step 501, the first terminal may also broadcast the second information on the sidelink when an APP corresponding to the service-related identifier is started. Correspondingly, the second terminal may receive the second information from the first terminal on the sidelink when the APP corresponding to the service-related identifier is started.

The sequence may be the sequence shown in Case 1 and Case 2.

Case 1: The sequence is a preamble sequence (Preamble).

For example, the preamble sequence may be a ZC sequence (that is, a zad-off Chu sequence).

In Case 1, for example, refer to FIG. 8. If the first terminal broadcasts six access resources in total: an access resource 1 to an access resource 6, the second terminal may send the preamble sequence to the first terminal on the access resource 4.

In Case 1, the first terminal may determine, through blind detection, the preamble sequence sent by the second terminal, and further determine an identifier of the preamble sequence.

In Case 1, because a data volume of the preamble sequence is relatively large, and a capacity of carrying data in the access message is limited, the preamble sequence cannot be carried in the access message, and the sequence can only be directly sent to the first terminal. In addition, because the data volume of the preamble sequence is relatively large, after receiving the preamble sequence, the first terminal also needs to compare a relatively large amount of data during the blind detection. Therefore, the second terminal can be distinguished more accurately.

In Case 1, before step 702, the method further includes the following steps.

701A. The first terminal broadcasts sequence information. The sequence information is used to indicate an identifier of a sequence supported by the first terminal (for example, an identifier of each sequence supported by the first terminal), or an identifier range of a sequence supported by the first terminal (for example, a start identifier of the sequence supported by the first terminal and an end identifier of the sequence). Correspondingly, the second terminal receives the sequence information from the first terminal.

701B. The second terminal selects a sequence from the sequences supported by the first terminal as a sequence to be sent to the first terminal.

During specific implementation of step 701B, the second terminal may randomly select a sequence from the sequences supported by the first terminal as the sequence to be sent to the first terminal. It can be learned that sequences sent by different second terminals may be different or may be the same.

Each sequence corresponds to one identifier. The identifier of the sequence is used by the first terminal to determine whether the sequence is a sequence supported by the first terminal. The sequence broadcast by the first terminal may be determined by the first terminal, or may be configured by an access network device for the first terminal. If the sequence is configured by the access network device, for example, the sequence information may be carried in the SSB or the SIB. In addition, the sequences of the first terminal and the second terminal may alternatively be specified in a protocol. This is not limited in this application.

It should be noted that, to distinguish between different first terminals (that is, different header terminals), different first terminals may support different sequences.

For example, the access network device may allocate some ZC sequences to a first terminal 1, and allocate the other ZC sequences to a first terminal 2. For example, refer to Table 2. The first terminal 1 may support a ZC sequence 1, a ZC sequence 2, and a ZC sequence 3, and the first terminal 2 may support a ZC sequence 4, a ZC sequence 5, a ZC sequence 6, and a ZC sequence 7.

**Table 2**

| First terminal | ZC sequence |
|---|---|
| First terminal 1 | ZC sequence 1 |
| | ZC sequence 2 |
| | ZC sequence 3 |
| First terminal 2 | ZC sequence 4 |
| | ZC sequence 5 |
| | ZC sequence 6 |
| | ZC sequence 7 |

In case 1, after receiving the sequence, the first terminal may perform blind detection, to determine which sequence is sent by the second terminal, and further determine whether the sequence is supported by the first terminal. The first terminal may determine, based on whether a received sequence is a sequence supported by the first terminal, whether the second terminal needs to access the first terminal. If the sequence received by the first terminal is a sequence supported by the first terminal, the first terminal determines that the second terminal needs to access the first terminal. Otherwise, it is determined that the second terminal does not need to access the first terminal.

Case 2: The sequence is a DMRS sequence corresponding to the second terminal.

In Case 2, in a first implementation, the DMRS sequence is carried in the access message, and the DMRS sequence is determined based on the identifier of the second terminal (for a determining method, refer to Manner 2 in Embodiment 1). The identifier of the second terminal may be partial or all of the identifier of the second terminal. For details, refer to Embodiment 1 for understanding, and details are not described again.

In Case 2, in a second implementation, the DMRS sequence is carried in the access message, the access message further includes a first partial identifier of the second terminal, and the DMRS sequence corresponding to the second terminal is determined based on a second partial identifier of the second terminal (for a determining method, refer to Manner 2 in Embodiment 1). The identifier of the second terminal consists of the first partial identifier and the second partial identifier of the second terminal.

The first partial identifier of the second terminal is a part of data in the access message, and the data in the access message may further include other information, for example, information such as higher layer load, a QoS parameter, and a carried data volume. The first terminal may obtain the data in the access message through decoding.

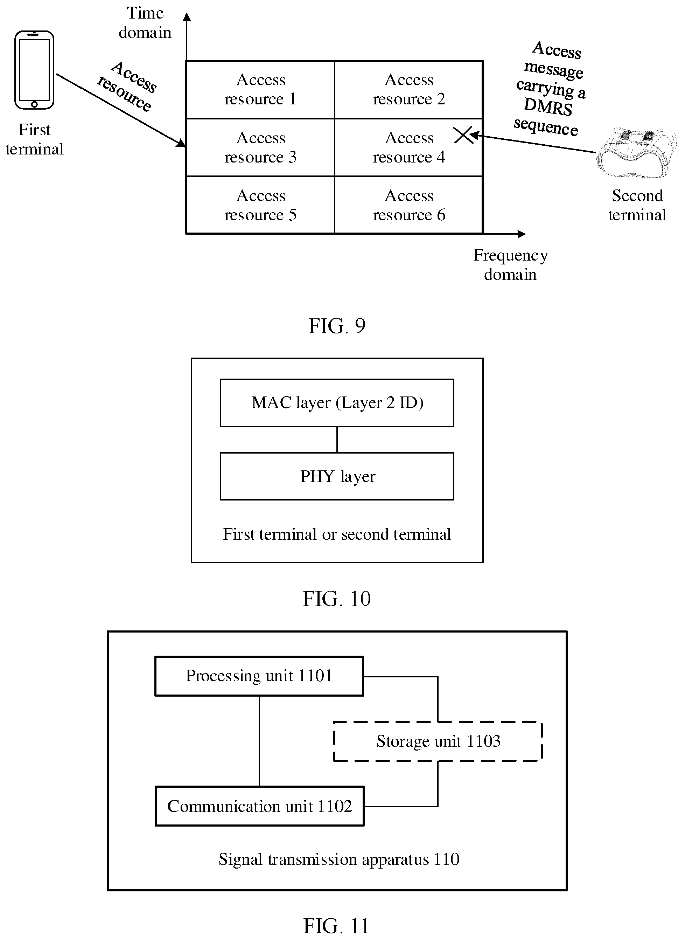

For example, refer to FIG. 9. If the first terminal broadcasts six access resources in total: the access resource 1 to the access resource 6, the second terminal may send the access message that carries the DMRS sequence to the first terminal on the access resource 4.

In Case 2, after the first terminal receives the access message, the first terminal may obtain the first partial identifier of the second terminal by decoding the access message, and perform blind detection on a signal at a time-frequency location that is used to carry the DMRS sequence and that is in the access message, to obtain the DMRS sequence.

In Case 2, to enable the first terminal to further identify whether the access message is an access message sent to the first terminal, optionally, the access message further includes the identifier of the first terminal. Specifically, after receiving the SSB, the second terminal determines the identifier of the first terminal that sends the SSB. If it is determined, based on the service-related identifier, that the first terminal is the first terminal that the second terminal needs to access, the second terminal uses the access message to carry the identifier of the first terminal and sends the access message to the first terminal. After receiving the access message, if the first terminal finds that the identifier carried in the access message is consistent with the identifier of the first terminal, the first terminal determines that the access message is the access message sent to the first terminal.

Optionally, after step 702, the first terminal may identify the second terminal, and this may be specifically implemented in the following Manner 1 or Manner 2.

Manner 1: The first terminal determines the second terminal by using the identifier of the sequence.

Manner 1 is applicable to a scenario in which sequences sent by all second terminals are different. Access resources used by different second terminals to send the sequences may be the same or may be different.

In Manner 1, if the first terminal receives x (x is an integer greater than 0) supported sequences, and the x supported sequences are all different sequences, it may be determined that x second terminals request to access the first terminal. However, which second terminals are specifically the x second terminals is unknown. Therefore, in a subsequent process, the first terminal may use the identifier of the sequence as a temporary identifier of the second terminal, to allocate a resource to the second terminal.

Scenarios to which the manner 1 is applicable may be specifically further classified into the following Scenario 1 and Scenario 2.

Scenario 1: The sequence is the DMRS sequence, and different second terminals send, by using different access resources, access messages that carry the DMRS sequence.

In Scenario 1, the method further includes the following steps.

(11) The first terminal sends resource configuration information to the second terminal corresponding to the identifier of the sequence, and the resource configuration information includes information used to indicate a resource configured for the second terminal and the identifier of the sequence. Correspondingly, the second terminal receives the resource configuration information from the first terminal.

(12) When the identifier in the resource configuration information is consistent with the identifier of the sequence sent by the second terminal, the second terminal transmits data with the first terminal on the configured resource.

In Scenario 1, if the sequence is the DMRS sequence, different second terminals send access messages that carry the DMRS sequence by using different access resources, and the first terminal can obtain data in the access message through decoding, the second terminal transmits data with the first terminal on a resource configured by using the resource configuration information. In Embodiment 2, when the resource configured by using the resource configuration information is used to transmit data, the resource may be considered as a transmission resource. To avoid occupying an access resource used by another second terminal, the resource configured by using the resource configuration information in Embodiment 2 is different from the access resource broadcast by the first terminal.

For the second implementation in Case 2, if different second terminals send, by using different access resources, the access messages that carry the DMRS sequences, the first terminal may obtain the first partial identifier of the second terminal in the access message through parsing. In this case, the resource configuration information may further include the first partial identifier of the second terminal. In this case, the step (12) may be replaced with "When the identifier of the DMRS sequence in the resource configuration information is consistent with the identifier of the DMRS sequence used when the second terminal sends the access message to the first terminal, and the first partial identifier that is of the second terminal and that is in the resource configuration information is consistent with the first partial identifier in the second terminal, the second terminal transmits data with the first terminal on the configured resource.

Scenario 2: The sequence is the preamble sequence; or the sequence is the DMRS sequence, and different second terminals send, by using a same access resource, access messages that carry the DMRS sequence.

In scenario 2, the method further includes the following steps.

(21) The first terminal sends the resource configuration information to the second terminal corresponding to the identifier of the sequence, and the resource configuration information includes information used to indicate the resource configured for the second terminal and the identifier of the sequence. Correspondingly, the second terminal receives the resource configuration information from the first terminal.

(22) When the identifier in the resource configuration information is consistent with the identifier of the sequence sent by the second terminal, the second terminal transmits the access message to the first terminal on the configured resource.

In the Scenario 2, if the sequence is the preamble sequence, the second terminal transmits the access message to the first terminal on the resource configured by using the resource configuration information. In Embodiment 2, when the resource configured by using the resource configuration information is used to transmit the access message, the resource may be considered as an access resource. The second terminal sends the access message to the first terminal on the access resource configured by using the resource configuration information. Correspondingly, the first terminal receives the access message on the access resource, and decodes the access message. After decoding, the first terminal may allocate a transmission resource to the second terminal, so that the second terminal transmits data by using the transmission resource.

In Scenario 2, if the sequence is the DMRS sequence, different second terminals send access messages that carry the DMRS sequence by using a same access resource, and the first terminal cannot obtain the data in the access message through decoding, the second terminal transmits the access message on the configured resource, so that the first terminal obtains the data in the access message.

For the second terminal, how to determine whether to send data or send the access message on the resource configured by using the resource configuration information may include but is not limited to the following two implementations.

First implementation: a resource used to transmit the data is relatively large, and a resource used to transmit the access message is relatively small. In this case, the second terminal may determine, based on a size of the configured resource, whether to transmit the data or transmit the access message.

Second implementation: after receiving the access message, the first terminal may obtain the DMRS sequence by performing blind detection on the signal at the time-frequency location that is in the access message and that is used to carry the DMRS sequence, further determine the identifier of the DMRS sequence, and decode the data in the access message to obtain the first partial identifier of the second terminal. During resource configuration, if the second terminal obtains only the identifier of the DMRS sequence, the identifier of the DMRS sequence is carried in the resource configuration information. If the second terminal obtains the identifier of the DMRS sequence and the first partial identifier of the second terminal, the second terminal may carry the identifier of the DMRS sequence and the first partial identifier of the second terminal in the resource configuration information. In this case, if the second terminal receives the first partial identifier of the second terminal, it indicates that the first terminal successfully decodes the data in the access message, and the second terminal may transmit the data on the resource configured by using the resource configuration information. If the second terminal receives only the identifier of the DMRS sequence, it indicates that the first terminal fails to decode the data in the access message, and the second terminal may transmit the access message on the resource configured by using the resource configuration information.

Manner 2: The first terminal identifies the second terminal based on the identifier of the sequence and an identifier of the access resource used when the second terminal sends the sequence.

Manner 2 is applicable to a scenario in which the sequence is the DMRS sequence corresponding to the second terminal and the sequences sent by the plurality of second terminals are the same, but the access resources used for sending the sequences are different.

In Manner 2, if the first terminal receives s supported sequences, the s supported sequences are the same, and access resources used by the s supported sequences are all different, it may be determined that s second terminals request to access the first terminal. However, which second terminals are specifically the s second terminals is unknown, and the identifier of the sequence cannot uniquely identify one second terminal. Therefore, the first terminal may use the identifier of the sequence and the identifier of the access resource as the temporary identifier of the second terminal, to allocate a resource to the second terminal.

In Manner 2, if an identifier of the sequence and an identifier of an access resource used to send the sequence are denoted as a first identifier, the method further includes the following steps.

(31) The first terminal sends the resource configuration information to the second terminal corresponding to the first identifier, and the resource configuration information includes the first identifier and the information used to indicate the resource configured for the second terminal. Correspondingly, the second terminal receives the resource configuration information from the first terminal.

(32) When the identifier in the resource configuration information is consistent with the first identifier in the second terminal, the second terminal transmits data with the first terminal on the configured resource.

The second terminal may determine, based on whether the identifier in the received resource configuration information is consistent with the first identifier in the second terminal, whether the resource is a resource configured by the first terminal for the second terminal. If the identifier in the resource configuration information is consistent with the first identifier in the second terminal, it may be determined that the resource is the resource configured by the first terminal for the second terminal. Otherwise, it is determined that the resource is not the resource configured by the first terminal for the second terminal.

Manner 3: The first terminal identifies the second terminal based on the identifier of the sequence and the first partial identifier of the second terminal.

Manner 3 is applicable to a scenario in which the sequences sent by the plurality of second terminals are the same, but the access resources used for sending the sequences are different, where the sequences are DMRS sequences corresponding to the second terminals, and the access message further includes the first partial identifier of the second terminal.

In Manner 3, if the first terminal receives q supported sequences, the q supported sequences are the same, and access resources used by the q supported sequences are all different, it may be determined that q second terminals request to access the first terminal. However, which second terminals are the q second terminals is unknown. Because different second terminals send, by using different access resources, the access message carrying the DMRS sequence, the first terminal may obtain the first partial identifier of the second terminal in the access message through parsing, and the identifier of the sequence cannot uniquely identify one second terminal, the first terminal may use the identifier of the sequence and the first partial identifier of the second terminal as the temporary identifier of the second terminal, to allocate a resource for the second terminal.

In Manner 3, if the identifier of the sequence and the first partial identifier of the second terminal are recorded as a second identifier, the method further includes the following steps.

(41) The first terminal sends the resource configuration information to the second terminal corresponding to the second identifier, and the resource configuration information includes the second identifier and the information used to indicate the resource configured for the second terminal. Correspondingly, the second terminal receives the resource configuration information from the first terminal.

(42) When the identifier in the resource configuration information is consistent with the second identifier in the second terminal, the second terminal transmits data with the first terminal on the configured resource.

The second terminal may determine, based on whether the identifier in the received resource configuration information is consistent with the second identifier in the second terminal, whether the resource is the resource configured by the first terminal for the second terminal. If the identifier in the resource configuration information is consistent with the second identifier in the second terminal, it may be determined that the resource is the resource configured by the first terminal for the second terminal. Otherwise, it is determined that the resource is not the resource configured by the first terminal for the second terminal.

It should be noted that, if the supported sequences received by the first terminal include both same sequences and different sequences, for the same sequences, the first terminal may identify the second terminal and configure the resource according to Manner 2 or Manner 3; and for different sequences, the second terminal may be identified and the resource may be configured according to Manner 1.

To understand Manner 1 to Manner 3 more clearly, whether the first terminal can identify the second terminal, whether the first terminal can decode the data in the access message, and subsequently allocated resources in various cases are summarized. For details, refer to Table 3.

**Table 3**

| Sequence | Whether access resources used by different second terminals are the same | Whether sequences used by different second terminals are the same | Whether the second terminal can be identified | Whether the data in the access message can be decoded | Subsequently allocated resources |
|---|---|---|---|---|---|
| Preamble sequence | Same | Same | No | - | Not allocated |
| | Same | Different | Yes | | Access resource |
| | Different | Different | | | |
| | Different | Same | | | |
| DMRS sequence | Same | Same | No | No | Not allocated |
| | Same | Different | Yes | | Access resource |
| | Different | Different | | Yes | Transmission resource |
| | Different | Same | | | |

In the foregoing Manner 1 to Manner 3, optionally, the resource configuration information is carried in the SCI. The SCI may be carried in a resource allocation message corresponding to the sequence. The resource configured by using the resource configuration information may include one or more of a time domain resource, a frequency domain resource, and a code domain resource.

When the sequence is the preamble sequence, if sequences and access resources used by different second terminals are the same, the first terminal does not allocate the access resource to the second terminal. In this case, the second terminal may select an access resource from an access resource indicated in second information received next time, and resend the access sequence to the first terminal.

When the sequence is the DMRS sequence, optionally, the method further includes: When the second terminal does not receive the resource allocation message corresponding to the access message, the second terminal reselects an access resource, and sends the access message to the first terminal by using the reselected access resource. For related descriptions of the optional method, refer to Embodiment 1. Details are not described again.

In Manner 1 to Manner 3, the data transmitted between the second terminal and the first terminal includes serving data and/or service data. For example, if the service provided by the first terminal for the second terminal is a VR video, the service data transmitted between the second terminal and the first terminal is VR video data. If the service provided by the first terminal for the second terminal is a VR game, the service data transmitted between the second terminal and the first terminal is VR game data.

In Manner 1 to Manner 3, a process of transmitting the service data between the second terminal and the first terminal may include: The second terminal sends picture update information to the first terminal, and the first terminal receives the picture update information from the second terminal, and sends updated picture information to the second terminal based on the picture update information. Correspondingly, the second terminal receives the updated picture information from the first terminal, and updates a picture based on the updated picture information. For related descriptions of the process, refer to Embodiment 1. Details are not described again.

During specific implementation, as shown in FIG. 10, the method provided in the foregoing embodiment may be implemented by using a MAC layer and a PHY layer in the first terminal and the second terminal. For example, as shown in FIG. 10, the layer 2 ID in the foregoing embodiment may be an ID of a MAC layer. The first terminal may send the SSB at the PHY layer, and correspondingly, the second terminal may receive the SSB at the PHY layer. The layer 2 ID carried in the SSB may be delivered by the MAC layer to the PHY layer.

The technical features in Embodiment 1 and Embodiment 2 may be used in combination if the solutions do not conflict. For example, the description of the service-related identifier in Embodiment 1 is also applicable to Embodiment 2.

The foregoing mainly describes the solutions in embodiments of this application from a perspective of interaction between network elements. It may be understood that to implement the foregoing functions, the network elements such as the first terminal and the second terminal each include at least one of a corresponding hardware structure and/or software module for performing the functions. A person skilled in the art should easily be aware that, in combination with units and algorithm steps of the examples described in embodiments disclosed in this specification, this application may be implemented by hardware or a combination of hardware and computer software. Whether a function is performed by the hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal and the second terminal each may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software function unit. It should be noted that, in embodiments of this application, division into the units is an example, and is merely a logical function division. In actual implementation, another division manner may be used.

When an integrated unit is used, FIG. 11 is a schematic diagram of a possible structure of a signal transmission apparatus (denoted as a signal transmission apparatus 110) in the foregoing embodiments. The signal transmission apparatus 110 includes a processing unit 1101 and a communication unit 1102, and may further include a storage unit 1103. The schematic diagram of the structure shown in FIG. 11 may be used to illustrate structures of the first terminal and the second terminal in the foregoing embodiments.

When the schematic diagram of the structure shown in FIG. 11 is used to show the structure of the first terminal in the foregoing embodiments, the processing unit 1101 is configured to control and manage an action of the first terminal. For example, the processing unit 1101 is configured to support the first terminal in performing steps 501 to 504 in FIG. 5, and steps 701 and 702 in FIG. 7, and some or all of actions performed by the first terminal in another process described in embodiments of this application. The processing unit 1101 may communicate with another network entity by using the communication unit 1102, for example, communicate with the second terminal shown in FIG. 5. The storage unit 1103 is configured to store program code and data that are of the first terminal. The signal transmission apparatus 110 may be the first terminal, or may be a chip in the first terminal.

When the schematic diagram of the structure shown in FIG. 11 is used to show the structure of the second terminal in the foregoing embodiments, the processing unit 1101 is configured to control and manage an action of the second terminal. For example, the processing unit 1101 is configured to support the second terminal in performing steps 501 to 504 in FIG. 5, and steps 701 and 702 in FIG. 7, and some or all of actions performed by the second terminal in another process described in embodiments of this application. The processing unit 1101 may communicate with another network entity by using the communication unit 1102, for example, communicate with the first terminal shown in FIG. 5. The storage unit 1103 is configured to store program code and data that are of the second terminal. The signal transmission apparatus 110 may be the second terminal, or may be a chip in the second terminal.

When the signal transmission apparatus 110 is the first terminal or the second terminal, the processing unit 1101 may be a processor or a controller, and the communication unit 1102 may be a communication interface, a transceiver, a transceiver machine, a transceiver circuit, a transceiver apparatus, or the like. The communication interface is a collective term, and may include one or more interfaces. The storage unit 1103 may be a memory. When the signal transmission apparatus 110 is the chip in the first terminal or the second terminal, the processing unit 1101 may be a processor or a controller, and the communication unit 1102 may be an input interface and/or an output interface, a pin, a circuit, or the like. The storage unit 1103 may be a storage unit (for example, a register or a cache) in the chip, or may be a storage unit (for example, a read-only memory or a random access memory) that is in the first terminal or the second terminal and that is located outside the chip.

The communication unit may also be referred to as a transceiver unit. An antenna and a control circuit that have receiving and transmitting functions and that are in the signal transmission apparatus 110 may be considered as the communication unit 1102 in the signal transmission apparatus 110, and a processor having a processing function may be considered as the processing unit 1101 in the signal transmission apparatus 110. Optionally, a component configured to implement a receiving function in the communication unit 1102 may be considered as a receiving unit. The receiving unit is configured to perform a receiving step in embodiments of this application. For example, a receiving unit in the first terminal may be configured to receive the access message or the sequence, and a receiving unit in the second terminal may be configured to receive the first information, the second information, or the like. The receiving unit may be a receiving machine, a receiver, a receiving circuit, or the like. A component configured to implement a sending function in the communication unit 1102 may be considered as a sending unit. The sending unit is configured to perform a sending step in embodiments of this application. For example, a sending unit in the first terminal may be configured to send the access message or the sequence, and a sending unit in the second terminal may be configured to send the first information, the second information, or the like. The sending unit may be a transmitter machine, a transmitter, a transmitter circuit, or the like.

When the integrated unit in FIG. 11 is implemented in a form of a software functional module and sold or used as an independent product, the integrated unit may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, a terminal device, or the like) or a processor (processor) to perform all or some of the steps of the methods in embodiments of this application. The storage medium that stores the computer software product includes any medium that can store program code, such as a USB flash drive, a removable hard disk drive, a read-only memory (read-only memory, ROM), a random access memory (random access memory, RAM), a magnetic disk, or an optical disc.

The unit in FIG. 11 may also be referred to as a module. For example, the processing unit may be referred to as a processing module.

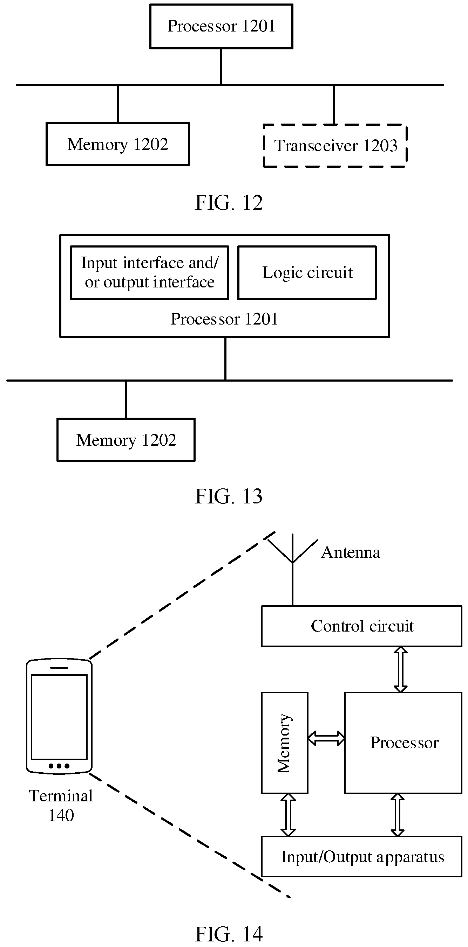

An embodiment of this application further provides a schematic diagram of a hardware structure of a signal transmission apparatus. Refer to FIG. 12 or FIG. 13. The signal transmission apparatus includes a processor 1201. Optionally, the signal transmission apparatus further includes a memory 1202 connected to the processor 1201.

The processor 1201 may be a general-purpose central processing unit (central processing unit, CPU), a microprocessor, an application-specific integrated circuit (application-specific integrated circuit, ASIC), or one or more integrated circuits configured to control program execution of the solutions in this application. The processor 1201 may further include a plurality of CPUs, and the processor 1201 may be a single-core (single-CPU) processor or a multi-core (multi-CPU) processor. The processor herein may refer to one or more devices, circuits, or processing cores configured to process data (for example, computer program instructions).

The memory 1202 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc), a magnetic disk storage medium or another magnetic storage device, or any other medium that can be used to carry or store expected program code in a form of instructions or a data structure and that can be accessed by a computer. This is not limited in the embodiments of this application. The memory 1202 may exist independently, or may be integrated with the processor 1201. The memory 1202 may include computer program code. The processor 1201 is configured to execute the computer program code stored in the memory 1202, to implement the method provided in embodiments of this application.

In a first possible implementation, as shown in FIG. 12, the signal transmission apparatus further includes a transceiver 1203. The processor 1201, the memory 1202, and the transceiver 1203 are connected by using a bus. The transceiver 1203 is configured to communicate with another device or a communication network. Optionally, the transceiver 1203 may include a sender and a receiver. A component configured to implement a receiving function in the transceiver 1203 may be considered as a receiver. The receiver is configured to perform a receiving step in embodiments of this application. For example, a receiver in the first terminal may be configured to receive the access message or the sequence, and a receiver in the second terminal may be configured to receive the first information, the second information, or the like. A component configured to implement a sending function in the transceiver 1203 may be considered as a sender. The sender is configured to perform a sending step in embodiments of this application. For example, a sender in the first terminal may be configured to send the access message or the sequence, and a sender in the second terminal may be configured to send the first information, the second information, or the like.

Based on the first possible implementation, a schematic diagram of a structure shown in FIG. 12 may be used to show a structure of the first terminal or the second terminal in the foregoing embodiments.

When the schematic diagram of the structure shown in FIG. 12 is used to show the structure of the first terminal in the foregoing embodiments, the processor 1201 is configured to control and manage an action of the first terminal. For example, the processor 1201 is configured to support the first terminal in performing steps 501 to 504 in FIG. 5, and steps 701 and 702 in FIG. 7, and some or all of actions performed by the first terminal in another process described in embodiments of this application. The processor 1201 may communicate with another network entity by using the transceiver 1203, for example, communicate with the second terminal shown in FIG. 5. The memory 1202 is configured to store program code and data that are of the first terminal.

When the schematic diagram of the structure shown in FIG. 12 is used to show the structure of the second terminal in the foregoing embodiments, the processor 1201 is configured to control and manage an action of the second terminal. For example, the processor 1201 is configured to support the second terminal in performing steps 501 to 504 in FIG. 5, and steps 701 and 702 in FIG. 7, and some or all of actions performed by the second terminal in another process described in embodiments of this application. The processor 1201 may communicate with another network entity by using the transceiver 1203, for example, communicate with the first terminal shown in FIG. 5. The memory 1202 is configured to store program code and data that are of the second terminal.

In a second possible implementation, the processor 1201 includes a logic circuit, and an input interface and/or an output interface. The output interface is configured to perform a sending action in a corresponding method. For example, an output interface in the second terminal may be configured to send the access message or the sequence, and an output interface in the first terminal may be configured to send the first information, the second information, or the like. The input interface is configured to perform a receiving action in a corresponding method. For example, an input interface in the second terminal may be configured to receive the access message or the sequence, and an input interface in the first terminal may be configured to receive the first information, the second information, or the like.

Based on the second possible implementation, a schematic diagram of a structure shown in FIG. 13 may be used to show a structure of the first terminal or the second terminal in the foregoing embodiments.

When the schematic diagram of the structure shown in FIG. 13 is used to show the structure of the first terminal in the foregoing embodiments, the processor 1201 is configured to control and manage an action of the first terminal. For example, the processor 1201 is configured to support the first terminal in performing steps 501 to 504 in FIG. 5, and steps 701 and 702 in FIG. 7, and some or all of actions performed by the first terminal in another process described in embodiments of this application. The processor 1201 may communicate with another network entity by using at least one of the input interface and the output interface, for example, communicate with the second terminal shown in FIG. 5. The memory 1202 is configured to store program code and data that are of the first terminal.

When the schematic diagram of the structure shown in FIG. 13 is used to show the structure of the second terminal in the foregoing embodiments, the processor 1201 is configured to control and manage an action of the second terminal. For example, the processor 1201 is configured to support the second terminal in performing steps 501 to 504 in FIG. 5, and steps 701 and 702 in FIG. 7, and some or all of actions performed by the second terminal in another process described in embodiments of this application. The processor 1201 may communicate with another network entity by using at least one of the input interface and the output interface, for example, communicate with the first terminal shown in FIG. 5. The memory 1202 is configured to store program code and data that are of the second terminal.

In addition, an embodiment of this application further provides a schematic diagram of a hardware structure of a terminal (denoted as a terminal 140). For details, refer to FIG. 14.

FIG. 14 is a schematic diagram of a hardware structure of a terminal 140. For ease of description, FIG. 14 shows only main components of the terminal. As shown in FIG. 14, the terminal 140 includes a processor, a memory, a control circuit, an antenna, and an input/output apparatus.

The processor is mainly configured to process a communications protocol and communication data, control the entire terminal, execute a software program, and process data of the software program. For example, the processor is configured to control the terminal to perform steps 501 to 504 in FIG. 5 (in this case, the terminal 140 is the first terminal or the second terminal), 701 and 702 in FIG. 7 (in this case, the terminal 140 is the first terminal or the second terminal), and some or all of actions performed by the terminal in another process described in embodiments of this application. The memory is mainly configured to store the software program and the data. The control circuit (which may also be referred to as a radio frequency circuit) is mainly configured to: perform conversion between a baseband signal and a radio frequency signal, and process the radio frequency signal. The control circuit and the antenna together may also be referred to as a transceiver, and are mainly configured to receive and send a radio frequency signal in a form of an electromagnetic wave. The input/output apparatus, such as a touchscreen, a display screen, or a keyboard, is mainly configured to receive data input by a user and output data to the user.

After the terminal is powered on, the processor can read the software program in the memory, interpret and execute instructions of the software program, and process the data of the software program. When data (for example, the first information, the second information, the access message, or the sequence) needs to be sent through the antenna, the processor performs baseband processing on the to-be-sent data, and outputs a baseband signal to a control circuit in the control circuit. After performing radio frequency processing on the baseband signal, the control circuit sends the radio frequency signal in a form of an electromagnetic wave through the antenna. When data is sent to the terminal, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and only one processor. Actually, the terminal may include a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communications protocol and communications data. The central processing unit is mainly configured to: control the entire terminal, execute software program, and process data of the software program. The processor in FIG. 14 integrates functions of the baseband processor and the central processing unit. A person skilled in the art may understand that the baseband processor and the central processing unit may alternatively be separate processors, and are interconnected by using a technology such as a bus. A person skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may also be expressed as a baseband processing circuit or a baseband processing chip. The central processing unit may also be expressed as a central processing circuit or a central processing chip. A function of processing the communications protocol and the communications data may be built in the processor, or may be stored in the memory in a form of a software program. The processor executes the software program to implement a baseband processing function.

In an implementation process, steps of the methods in embodiments may be completed by using a hardware integrated logical circuit in the processor, or by using instructions in a form of software. The steps of the method disclosed with reference to embodiments of this application may be directly performed by a hardware processor, or may be performed by using a combination of hardware in the processor and a software module. For other descriptions about the processor in FIG. 14, refer to descriptions related to the processor in FIG. 12 and FIG. 13. Details are not described again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product is run on a computer, the computer is enabled to perform any one of the foregoing methods.

An embodiment of this application further provides a communication system, including the foregoing first terminal and the foregoing second terminal. Optionally, the communication system further includes an access network device.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk (SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

## Claims

1. A signal transmission method, comprising:
broadcasting (501), by a first terminal, first information on a sidelink, wherein the first information comprises a service-related identifier and information used to indicate at least one access resource, and the first terminal is configured to provide a service corresponding to the service-related identifier; and
receiving (502), by the first terminal, an access message from a second terminal on the at least one access resource;
wherein the method further comprises:
configuring (503), by the first terminal for the second terminal, a transmission resource for sending data to the first terminal; and
transmitting (504), by the first terminal, data with the second terminal on the transmission resource;
wherein the access message comprises identification information of the second terminal; and
the identification information of the second terminal is an identifier of a demodulation reference signal DMRS sequence, and the DMRS sequence is determined based on an identifier of the second terminal; or,
the identification information of the second terminal is an identifier of the DMRS sequence and a first partial identifier of the second terminal, the DMRS sequence is determined based on a second partial identifier of the second terminal, and the identifier of the second terminal consists of the first partial identifier and the second partial identifier of the second terminal.

2. The method according to claim 1, wherein the first information is carried in a synchronization signal block SSB; or the first information is carried in a system information block SIB, and information used to indicate a resource location of the SIB is carried in an SSB.

3. The method according to claim 2, wherein the SSB further comprises an identifier of the first terminal; and/or the access message further comprises the identifier of the first terminal.

4. The method according to any one of claims 1 to 3, wherein the access message comprises an identifier of the second terminal.

5. The method according to claim 4, wherein the configuring, by the first terminal for the second terminal, a transmission resource for sending data to the first terminal comprises:
sending, by the first terminal, transmission resource configuration information to the second terminal corresponding to the identifier of the second terminal, wherein the transmission resource configuration information comprises the identifier of the second terminal and information used to indicate the transmission resource.

6. The method according to claim 5, wherein the configuring, by the first terminal for the second terminal, a transmission resource for sending data to the first terminal comprises:
sending, by the first terminal, transmission resource configuration information to the second terminal corresponding to the identifier of the DMRS sequence, wherein the transmission resource configuration information comprises the identification information of the second terminal and information used to indicate the transmission resource.

7. The method according to claim 5 or 6, wherein the transmission resource configuration information is carried in sidelink control information SCI.

8. The method according to any one of claims 1 to 7, wherein
the broadcasting, by a first terminal, first information on a sidelink comprises: broadcasting, by the first terminal, the first information on the sidelink when an application corresponding to the service-related identifier is started; and
the transmitting, by the first terminal, data with the second terminal on the transmission resource comprises: receiving, by the first terminal, picture update information from the second terminal, and sending, by the first terminal, updated picture information to the second terminal based on the picture update information.

9. The method according to any one of claims 1 to 8, wherein the service-related identifier broadcast by the first terminal is transferred from an upper-layer protocol layer of the first terminal.

10. The method according to any one of claims 1 to 9, wherein the service comprises one or more of a virtual reality VR game, a VR video, an augmented reality AR game, or an AR video.

11. A signal transmission apparatus (110), wherein the signal transmission apparatus comprises a processor (1101); and
the processor (1101) is coupled to a memory (1103), the memory (1103) is configured to store computer-executable instructions, and the processor (1101) executes the computer-executable instructions stored in the memory (1103), so that the signal transmission apparatus (110) implements the signal transmission method according to any one of claims 1 to 10.

12. A chip (1101), comprising a processor (1101) and an interface, wherein the processor (1101) is coupled to a memory (1103) by using the interface, and when the processor (1101) executes a computer program or instructions in the memory (1103), a signal transmission apparatus (110) is enabled to implement the signal transmission method according to any one of claims 1 to 10.

13. A computer-readable storage medium, comprising instructions, wherein when the instructions are run on a computer, the computer is enabled to perform the signal transmission method according to any one of claims 1 to 10.

## Patentansprüche

1. Signalübertragungsverfahren, umfassend:
Rundsenden (501) erster Informationen auf einem Sidelink durch ein erstes Endgerät, wobei die ersten Informationen einen dienstbezogene Identifikator und Informationen umfassen, die dazu verwendet werden, mindestens eine Zugangsressource anzugeben, und das erste Endgerät dazu konfiguriert ist, einen dem dienstbezogenen Identifikator entsprechenden Dienst bereitzustellen; und
Empfangen (502) einer Zugangsnachricht von einem zweiten Endgerät auf der mindestens einen Zugangsressource durch das erste Endgerät;
wobei das Verfahren ferner Folgendes umfasst:
Konfigurieren (503) einer Übertragungsressource zum Senden von Daten an das erste Endgerät durch das erste Endgerät für das zweite Endgerät; und
Übertragen (504) von Daten mit dem zweiten Endgerät auf der Übertragungsressource durch das erste Endgerät;
wobei die Zugangsnachricht Identifizierungsinformationen des zweiten Endgeräts umfasst; und
die Identifizierungsinformationen des zweiten Endgeräts ein Identifikator einer Demodulationsreferenzsignal(DMRS)-Sequenz sind und die DMRS-Sequenz basierend auf einem Identifikator des zweiten Endgeräts bestimmt wird; oder
die Identifizierungsinformationen des zweiten Endgeräts ein Identifikator der DMRS-Sequenz und ein erster Teilidentifikator des zweiten Endgeräts sind, wobei die DMRS-Sequenz basierend auf einem zweiten Teilidentifikator des zweiten Endgeräts bestimmt wird und der Identifikator des zweiten Endgeräts aus dem ersten Teilidentifikator und dem zweiten Teilidentifikator des zweiten Endgeräts besteht.

2. Verfahren nach Anspruch 1, wobei die ersten Informationen in einem Synchronisationssignalblock SSB enthalten sind; oder die ersten Informationen in einem Systeminformationsblock SIB enthalten sind und Informationen, die dazu verwendet werden, einen Ressourcenstandort des SIB anzugeben, in einem SSB enthalten sind.

3. Verfahren nach Anspruch 2, wobei der SSB ferner einen Identifikator des ersten Endgeräts umfasst; und/oder die Zugangsnachricht ferner den Identifikator des ersten Endgeräts umfasst.

4. Verfahren nach einem der Ansprüche 1 bis 3, wobei die Zugangsnachricht einen Identifikator des zweiten Endgeräts umfasst

5. Verfahren nach Anspruch 4, wobei das Konfigurieren einer Übertragungsressource zum Senden von Daten an das erste Endgerät durch das erste Endgerät Folgendes umfasst:
Senden von Übertragungsressourcenkonfigurationsinformationen an das zweite Endgerät durch das erste Endgerät, die dem Identifikator des zweiten Endgeräts entsprechen, wobei die Übertragungsressourcenkonfigurationsinformationen den Identifikator des zweiten Endgeräts und Informationen umfassen, die dazu verwendet werden, die Übertragungsressource anzugeben.

6. Verfahren nach Anspruch 5, wobei das Konfigurieren einer Übertragungsressource zum Senden von Daten an das erste Endgerät durch das erste Endgerät Folgendes umfasst:
Senden von Übertragungsressourcenkonfigurationsinformationen an das zweite Endgerät durch das erste Endgerät, die dem Identifikator der DMRS-Sequenz entsprechen, wobei die Übertragungsressourcenkonfigurationsinformationen die Identifizierungsinformationen des zweiten Endgeräts und Informationen umfassen, die dazu verwendet werden, die Übertragungsressource anzugeben.

7. Verfahren nach Anspruch 5 oder 6, wobei die Übertragungsressourcenkonfigurationsinformationen in Sidelink-Steuerinformationen SCI enthalten sind.

8. Verfahren nach einem der Ansprüche 1 bis 7, wobei
das Rundsenden erster Informationen auf einem Sidelink durch ein erstes Endgerät Folgendes umfasst: Rundsenden der ersten Informationen auf dem Sidelink durch das erste Endgerät, wenn eine dem dienstbezogenen Identifikator entsprechende Anwendung gestartet wird; und
das Übertragen von Daten mit dem zweiten Endgerät auf der Übertragungsressource durch das erste Endgerät Folgendes umfasst: Empfangen von Bildaktualisierungsinformationen von dem zweiten Endgerät durch das erste Endgerät und Senden aktualisierter Bildinformationen an das zweite Endgerät basierend auf den Bildaktualisierungsinformationen durch das erste Endgerät.

9. Verfahren nach einem der Ansprüche 1 bis 8, wobei der von dem ersten Endgerät rundgesendete dienstbezogene Identifikator von einer Protokollschicht einer oberen Schicht des ersten Endgeräts übermittelt wird.

10. Verfahren nach einem der Ansprüche 1 bis 9, wobei der Dienst eines oder mehrere eines Virtual-Reality(VR)-Spiels, eines VR-Videos, eines Augmented-Reality(AR)-Spiels oder eines AR-Videos umfasst.

11. Signalübertragungsvorrichtung (110), wobei die Signalübertragungsvorrichtung einen Prozessor (1101) umfasst; und der Prozessor (1101) mit einem Speicher (1103) verbunden ist, wobei der Speicher (1103) dazu konfiguriert ist, computerausführbare Anweisungen zu speichern, und der Prozessor (1101) die in dem Speicher (1103) gespeicherten computerausführbaren Anweisungen ausführt, so dass die Signalübertragungsvorrichtung (110) das Signalübertragungsverfahren nach einem der Ansprüche 1 bis 10 implementiert.

12. Chip (1101), umfassend einen Prozessor (1101) und eine Schnittstelle, wobei der Prozessor (1101) mithilfe der Schnittstelle mit einem Speicher (1103) verbunden ist und, wenn der Prozessor (1101) ein Computerprogramm oder Anweisungen in dem Speicher (1103) ausführt, es einer Signalübertragungsvorrichtung (110) ermöglicht wird, das Signalübertragungsverfahren nach einem der Ansprüche 1 bis 10 zu implementieren.

13. Computerlesbares Speichermedium, umfassend Anweisungen, wobei, wenn die Anweisungen auf einem Computer laufen gelassen werden, es dem Computer ermöglicht wird, das Signalübertragungsverfahren nach einem der Ansprüche 1 bis 10 durchzuführen.

## Revendications

1. Procédé de transmission de signal, comprenant :
la diffusion (501), par un premier terminal, de premières informations sur une liaison latérale, dans lequel les premières informations comprennent un identifiant relatif au service et des informations utilisées pour indiquer au moins une ressource d'accès, et le premier terminal est configuré pour fournir un service correspondant à l'identifiant relatif au service ; et
la réception (502), par le premier terminal, d'un message d'accès provenant d'un second terminal sur l'au moins une ressource d'accès ;
dans lequel le procédé comprend en outre :
la configuration (503), par le premier terminal pour le second terminal, d'une ressource de transmission pour l'envoi de données au premier terminal ; et
la transmission (504), par le premier terminal, de données avec le second terminal sur la ressource de transmission ;
dans lequel le message d'accès comprend des informations d'identification du second terminal ; et
les informations d'identification du second terminal sont un identifiant d'une séquence de signal de référence de démodulation DMRS, et la séquence DMRS est déterminée en fonction d'un identifiant du second terminal ; ou,
les informations d'identification du second terminal sont un identifiant de la séquence DMRS et un premier identifiant partiel du second terminal ; la séquence DMRS est déterminée en fonction d'un second identifiant partiel du second terminal ; et
l'identifiant du second terminal est constitué du premier identifiant partiel et du second identifiant partiel du second terminal.

2. Procédé selon la revendication 1, dans lequel les premières informations sont transportées dans un bloc de signal de synchronisation SSB ; ou les premières informations sont transportées dans un bloc d'informations système SIB, et les informations utilisées pour indiquer un emplacement de ressource du SIB sont transportées dans un SSB.

3. Procédé selon la revendication 2, dans lequel le SSB comprend en outre un identifiant du premier terminal ; et/ou le message d'accès comprend en outre l'identifiant du premier terminal.

4. Procédé selon l'une quelconque des revendications 1 à 3, dans lequel le message d'accès comprend un identifiant du second terminal.

5. Procédé selon la revendication 4, dans lequel la configuration, par le premier terminal pour le second terminal, d'une ressource de transmission pour l'envoi de données au premier terminal comprend :
l'envoi, par le premier terminal, d'informations de configuration de ressource de transmission au second terminal correspondant à l'identifiant du second terminal, dans lequel les informations de configuration de ressource de transmission comprennent l'identifiant du second terminal et des informations utilisées pour indiquer la ressource de transmission.

6. Procédé selon la revendication 5, dans lequel la configuration, par le premier terminal pour le second terminal, d'une ressource de transmission pour l'envoi de données au premier terminal comprend :
l'envoi, par le premier terminal, d'informations de configuration de ressource de transmission au second terminal correspondant à l'identifiant de la séquence DMRS, dans lequel les informations de configuration de ressource de transmission comprennent les informations d'identification du second terminal et des informations utilisées pour indiquer la ressource de transmission.

7. Procédé selon la revendication 5 ou 6, dans lequel les informations de configuration de ressource de transmission sont transportées dans des informations de commande de liaison latérale SCI.

8. Procédé selon l'une quelconque des revendications 1 à 7, dans lequel
la diffusion, par un premier terminal, de premières informations sur une liaison latérale comprend : la diffusion, par le premier terminal, des premières informations sur la liaison latérale lorsqu'une application correspondant à l'identifiant relatif au service est démarrée ; et
la transmission, par le premier terminal, de données au second terminal sur la ressource de transmission comprend : la réception, par le premier terminal, d'informations de mise à jour d'image provenant du second terminal, et l'envoi, par le premier terminal, d'informations d'image mises à jour au second terminal en fonction des informations de mise à jour d'image.

9. Procédé selon l'une quelconque des revendications 1 à 8, dans lequel l'identifiant relatif au service diffusé par le premier terminal est transféré à partir d'une couche de protocole de couche supérieure du premier terminal.

10. Procédé selon l'une quelconque des revendications 1 à 9, dans lequel le service comprend un ou plusieurs parmi un jeu de réalité virtuelle VR, une vidéo VR, un jeu de réalité augmentée AR ou une vidéo AR.

11. Appareil de transmission de signal (110), dans lequel l'appareil de transmission de signal comprend un processeur (1101) ; et
le processeur (1101) est couplé à une mémoire (1103), la mémoire (1103) est configurée pour stocker des instructions exécutables par ordinateur, et le processeur (1101) exécute les instructions exécutables par ordinateur stockées dans la mémoire (1103), de sorte que l'appareil de transmission de signal (110) met en œuvre le procédé de transmission de signal selon l'une quelconque des revendications 1 à 10.

12. Puce (1101), comprenant un processeur (1101) et une interface, dans laquelle le processeur (1101) est couplé à une mémoire (1103) en utilisant l'interface, et lorsque le processeur (1101) exécute un programme d'ordinateur ou des instructions dans la mémoire (1103), un appareil de transmission de signal (110) est activé pour mettre en œuvre le procédé de transmission de signal selon l'une quelconque des revendications 1 à 10.

13. Support de stockage lisible par ordinateur, comprenant des instructions, dans lequel lorsque les instructions fonctionnent sur un ordinateur, l'ordinateur est activé pour réaliser le procédé de transmission de signal selon l'une quelconque des revendications 1 à 10.
